# EUROPEAN PATENT SPECIFICATION

(11) **EP 3 210 435 B1**
(45) Date of publication and mention of the grant of the patent: **03.08.2022**
(21) Application number: 15790394.9
(22) Date of filing: 21.10.2015
(51) Int. Cl.: H04W 84/22, H04W 48/16, H04W 16/28, H04W 72/04

(54) **METHODS AND APPARATUSES TO FORM SELF-ORGANIZED MULTI-HOP MILLIMETER WAVE BACKHAUL LINKS**
VERFAHREN UND VORRICHTUNGEN ZUR HERSTELLUNG VON SELBSTORGANISIERTEN MULTIHOP-MILLIMETERWELLEN-BACKHAUL-VERBINDUNGEN
PROCÉDÉS ET APPAREILS DE CRÉATION DE LIAISONS TERRESTRES PAR BONDS MULTIPLES AUTO-ORGANISATRICES À ONDES MILLIMÉTRIQUES

(30) Priority: 21.10.2014 US 201462066787 P; 22.10.2014 US 201462067179 P
(43) Date of publication of application: 30.08.2017
(73) Proprietor: Apple Inc., Cupertino, CA 95014 (US)
(72) Inventor: MIAO, Honglei, 80686 Munich BY (DE); FAERBER, Michael, Santa Clara, CA 95054 (US)
(74) Representative: Barton, Russell Glen
(86) International application number: PCT/US2015/056758
(87) International publication number: WO 2016/065068

(56) References cited:
- WO-A1-2014/124164
- WO-A2-2013/170169
- US-A1- 2007 287 384
- US-A1- 2009 116 444
- HONGLEI MIAO ET AL: "Self-organized multi-hop millimeter-wave backhaul network: Beam alignment and dynamic routing", 2015 EUROPEAN CONFERENCE ON NETWORKS AND COMMUNICATIONS (EUCNC), 1 January 2015 (2015-01-01), pages 275-279, XP055243096, DOI: 10.1109/EuCNC.2015.7194083

## Description

### Field

Embodiments of the present disclosure generally relate to the field of wireless communication, and more particularly, to methods and apparatuses for multi-hop millimeter-wave backhaul support.

### Background

Millimeter-wave (mmWave) communication has been considered as a promising technique to fulfill prospective requirements of 5G mobile systems. Typically, mmWave communications occur in an extremely high-frequency (EHF) band that includes frequencies from 30 to 300 gigahertz (GHz).

Adopting mmWave communications for backhaul link connection between base stations has also drawn significant research interests in both academic and industry arenas. Two primary technical benefits are envisioned for the employment of mmWave communication. The first benefit is the provision of huge bandwidth to support a very high data rate of multiple gigabits per second with low latency. The second benefit is that good spatial separation between different links may be used to address propagation path loss. This will potentially increase the spatial reuse factor which turns into higher area spectrum efficiency. For instance, the signals to different links (or user equipments (UEs)) with distinct beam directions, which may be referred to as pencil beams, in some instances, may have limited mutual interference among each other. As such, the same frequency resource can be allocated to different links/UEs at the same time so as to increase the spectrum efficiency by spatial domain multiple access (SDMA) technique.

The primary challenge of adopting mmWave spectrum in the practical system is due to propagation loss caused by very high radio frequency. Hence, the typical coverage of an mmWave link is clearly shorter than that in the conventional mobile broadband spectrum below 6 GHz used in Long Term Evoluation (LTE) or other legacy systems.

WO2013170169 describes a method for configuring a millimeter wave (mmW) mesh network, which comprises: receiving, from a candidate node configured for millimeter wave communication, a request to join the mmW mesh network; transmitting, to the candidate node, a mesh neighbor candidate list associated with the candidate node; testing the candidate node, in accordance with the mesh neighbor candidate list, for conformance with the mmW mesh network; and if the testing indicates that the candidate node conforms with the mmW mesh network, joining the candidate node to the mmW mesh network.

WO2014124164 describes a method for establishing a low latency millimeter wave (mmW) backhaul connection, which comprises: receiving a mmW relay schedule from an evolved Node B (eNB) within one Long Term Evolution (LTE) scheduling interval; decoding the mmW relay schedule; initializing a mmW radio transmission resource according to the mmW relay schedule; receiving a data packet from a second base station in a mmW transmission time interval (TTI) based on the mmW relay schedule using the initialized mmW radio transmission resource; and transmitting the data packet to a third base station based on the mmW relay schedule using the initialized mmW radio transmission resource.

The invention is set out in the appended set of claims.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 illustrates a communication environment in accordance with some embodiments.
Figure 2 illustrates discovery signal structures in accordance with some embodiments.
Figure 3-5 illustrate phases of a backhaul link establishment procedure in accordance with some embodiments.
Figure 6 illustrates a computing apparatus in accordance with some embodiments.
Figure 7 illustrates a system in accordance with some embodiments. The invention is shown in the embodiment of figure 3 as discussed in the related passages below. All further references to embodiments are to be considered as examples useful for understanding the invention.

### Detailed Description

Various aspects of the illustrative embodiments will be described using terms commonly employed by those skilled in the art to convey the substance of their work to others skilled in the art. For purposes of explanation, specific numbers, materials, and configurations are set forth in order to provide a thorough understanding of the illustrative embodiments. In other instances, well-known features are omitted or simplified in order not to obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in some embodiments" is used repeatedly. The phrase generally does not refer to the same embodiments; however, it may. The terms "comprising," "having," and "including" are synonymous, unless the context dictates otherwise.

The phrases "A or B," "A/B," and "A and/or B" mean (A), (B), or (A and B).

As used herein, the term "circuitry" refers to, is part of, or includes hardware components such as an application specific integrated circuit (ASIC), an electronic circuit, a logic circuit, a processor (shared, dedicated, or group) and/or memory (shared, dedicated, or group) that are configured to provide the described operations. In some embodiments, the circuitry may execute one or more software or firmware programs to provide at least some of the described operations. In some embodiments, the circuitry may be implemented in, or operations associated with the circuitry may be implemented by, one or more software or firmware modules. In some embodiments, circuitry may include logic, at least partially operable in hardware, to perform the described operations.

As described above, a challenge of adopting mmWave spectrum may be related to limited coverage of an mmWave link. To provide sufficient backhaul link coverage, multi-hop relay backhauling may be used. This may result in a chain of multiple point-to-point (hop 1) links being used as a backhaul link from a target mmWave small cell base station to an anchor evolved node B (eNB) that connects the access network to a core network.

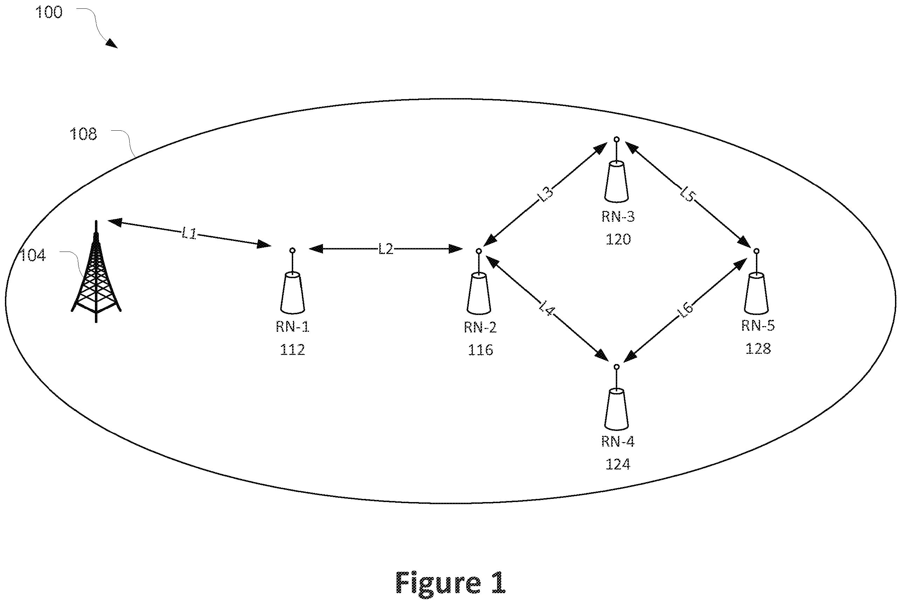

Figure 1 schematically illustrates a communication environment 100 in accordance with various embodiments. The communication environment 100 may include an anchor eNB 104 having a macrocell coverage area 108 of broadband spectrum. The communication environment 100 may also include five relay nodes (RNs) that are disposed in the macrocell coverage area 108, for example, RN-1 112, RN-2 116, RN-3 120, RN-4 124, and RN-5 128. At least one of the functions of the relay nodes may be to establish an mmWave backhaul connection to the eNB 104.

The eNB 104 and the relay nodes may be equipped with mmWave radio access technology (RAT) interfaces to communicate over mmWave communication links. The mmWave communication links (or simply mmWave links) are illustrated in Figure 1 by the arrow lines with respective labels Ly, where y = 1,2, ... 6.

A particular multi-hop backhaul link may be composed of a number of mmWave links. For example, a backhaul link between RN-5 128 and eNB 104 may be composed of LI, L2, L3, and L5, which may be referred to as path 1 (PI), or of LI, L2, L4, and L6, which may be referred to as path 2 (P2). The multi-hop backhaul link may be used for routing uplink traffic, for example, traffic from the RN-5 128 to the eNB 104, or for routing down link traffic, for example, traffic from the eNB 104 to the RN-5 128.

To reduce the initial installation effort, the backhaul link is desired to be established in a self-organized manner with minimum human interaction. To improve the network power efficiency, it is envisioned that certain relay nodes may be dynamically switched on and off depending on the traffic needs. Moreover, in some cases, to improve the link reliability, dynamic path switching or cooperative backhaul transmission is also foreseen to be beneficial. Thus, embodiments of the present disclosure provide a self-organized backhaul link establishment scheme with support for flexible dynamic path switching and possible cooperative transmission and/or reception.

This disclosure provides signaling methods to facilitate the above-mentioned self-organized multi-hop mmWave backhaul link establishment. Furthermore, the dynamic path switching and cooperative transmission can be flexibly supported in a transparent manner with respect to a target relay node.

A relay node as described herein may provide backhaul support and, in some embodiments, may also be equipped to provide radio access to users through a small cell, e.g., a cell associated with a coverage area that is less than coverage area 108. The small cell provided by a relay node may be an mmWave user access cell or a mobile broadband user access cell, for example, a 3^{rd} Generation Partnership Project (3GPP) Long Term Evolution (LTE) user access cell.

The eNB 104 may establish a radio resource control (RRC) connection with the RN-5 128 using an existing LTE procedure. The RRC connection may be established over a direct radio link between the eNB 104 and the RN-5 128 that is in mobile broadband spectrum, for example, frequencies below approximately 6 GHz.

The eNB 104 may serve as a primary cell (PCell) for newly camped mmWave relay nodes such as, for example, RN-5 128. The eNB 104 may transmit discovery information to the newly camped nodes such as RN-5 128 to provide information as to how the newly camped nodes are to receive discovery signals transmitted by other relay nodes, for example, RN-3 120 and RN-4 124 in Figure 1. As used herein, a newly camped relay node may be an mmWave relay node that is RRC connected with a macrocell eNB, but is not yet linked with other mmWave relay nodes.

The RN-5 128 may use the discovery information provided by the eNB 104 to search, detect, and measure discovery signals transmitted by other relay nodes, for example, RN-3 120 and RN-4 124. In some embodiments, the discovery signals may be measured for receive power or quality metrics. After measuring the discovery signals, the RN-5 128 may transmit a discovery signal report to the eNB 104 through the PCell.

The eNB 104 may use the reported power or quality metrics to select one or more relay nodes to provide one or more corresponding secondary cells (SCells) for the RN-5 128. Afterwards, the RN-5 128 may monitor backhaul link traffic on both the PCell, provided by the eNB 104, and the one or more SCells, provided by one or more relay nodes.

The RN-5 128 may transmit a capability message to the eNB 104 that indicates a number of parallel discovery signals that the RN-5 128 is capable of transmitting. The message may additionally/alternatively indicate a number of sequential mmWave discovery signals that may be transmitted in a discovery cluster. The capability message may be transmitted to the eNB 104 through the PCell.

Upon receiving the capability message from the RN-5 128, the eNB 104 configures and transmits an indication of discovery signal configuration information to the RN-5 128 through the PCell. The discovery signal configuration information includes discovery occasions and sequence identifiers. The discovery signal configuration information may be transmitted in a configuration message.

Upon receiving the configuration message, the RN-5 128 may start to transmit one or more discovery signals based on the discovery signal configuration information. This may allow other relay nodes in camping mode to detect the RN-5 128 for additional mmWave connections.

In some embodiments, all the relay nodes in the coverage area 108 may report receive power or quality of detected discovery signals to the eNB 104. The reports may be transmitted through respective PCells or SCells. In some embodiments, the reports may be transmitted by the relay nodes based on a periodic reporting event, for example, expiration of a periodic reporting timer, or based on a request from the eNB 104.

The eNB 104 may use the information fed back from each of the relay nodes to reconfigure the mmWave SCells and discovery signal configurations to each relay node to update a backhaul link topology or enable advanced cooperative operation.

Embodiments described enable the establishment of a self-organized, multi-hop mmWave backhaul link with automatic beam alignment by virtue of the measurement of directional discovery signals. The dynamic path switching and cooperative transmission for the backhaul link may be fully controlled by the eNB 104, which may have overall knowledge about the mmWave links in the network. Further, configuration or reconfiguration of the backhaul link may be performed through an established PCell, which may be more robust than the mmWave-based SCells. This may ensure a better user experience.

The discovery signals transmitted by the relay nodes may be performed on a periodic basis. These discovery signals may be implemented by signal sequences that have desirable auto-correlation properties, for example, Zadoff-Chu sequence in the LTE system, to aid the discovery signal detection.

Given transmit power limits and targeted beamforming gain, a relay node may transmit one or several parallel radio-frequency (RF) beams at the same time. Let *n_{b}* ∈ {1,2,..., *N_{b}*} define a number of parallel RF beams supported by a relay node. The relay node may transmit *n_{b}* discovery signals using the same time and frequency resources with different sequence signatures, which may be a function of sequence identifier, and beam directions.

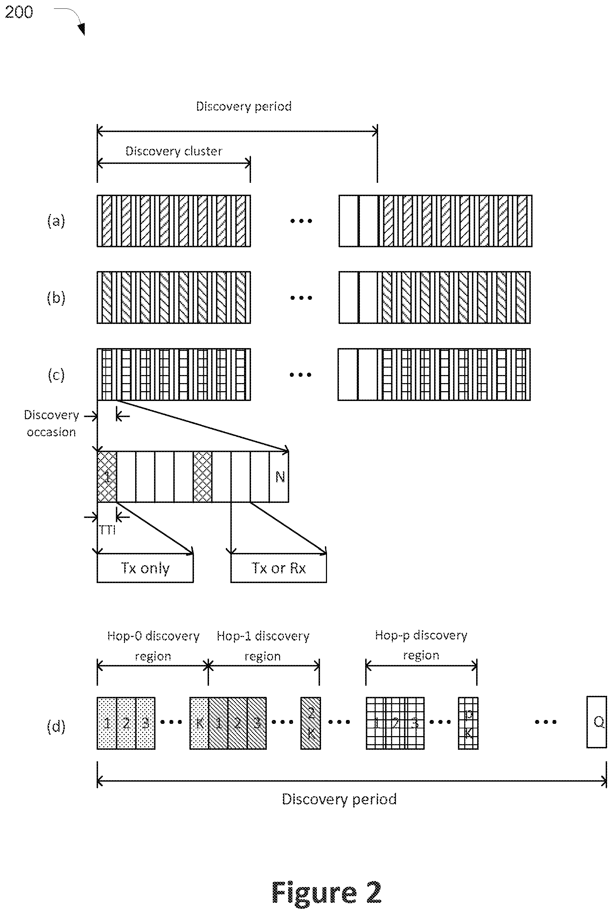

Figure 2 illustrates three discovery signals that may be transmitted by relay node in respective RF beams at the same time in accordance with some embodiments. The three discovery signals, shown as (a), (b), and (c) in Figure 2, may be transmitted at the same time with each discovery signal using a respective signal sequence signature. As shown in Figure 2, each of these discovery signals may include a discovery cluster transmitted periodically with the same period of *n_{D}* frames, for example, 80 ms, 160 ms, or longer. Each discovery cluster may include *n_{O}* discovery occasions, with each discovery occasion being comprised of N transmit time intervals (TTIs). One or several TTIs may be reserved for transmit (Tx) only in order to transmit discovery signals.

A discovery signal in each discovery occasion of a discovery cluster may be transmitted with different beam directions and, therefore, beam scanning may be performed by the same physical RF beamformer.

In one embodiment, a relay node, for example, RN-5 128, may include three antenna arrays, each of which may be driven by its own RF beam former and may serve a sector of 120°. Assuming *n_{O}*=*8*, each sector may be spanned by 8 beam directions (one for each discovery occasion) with a beam direction spacing of 15° in the time period of one discovery cluster. If one TTI is 100 µs, and one discovery occasion includes 10 TTIs, discovery signals may be transmitted over one sector in 8 ms.

To support a multi-hop backhaul link, each relay node may be capable of receiving and tracking a discovery signal from an upstream relay node and transmitting its own discovery signal for a downstream relay node or its served UEs. To avoid the need of transmitting and receiving simultaneously (and, thus, requiring full-duplex transmission structures), the relay nodes at different hops may transmit discovery signals at different times.

To facilitate the transmission of discovery signals at different times, p discovery regions may be defined at the beginning of each discovery period as shown in (d) of Figure 2. Each discovery region may include K discovery occasions. Different relay nodes may have different discovery signal capabilities and, therefore, need different numbers of discovery occasions to transmit discovery signals within a discovery cluster. Therefore, K may be selected to accommodate the anticipated maximum number of discovery occasions needed. In most instances, *K* may be greater than *n₀*, although *K* may also equal *n₀.*

Referring again to Figure 1, the eNB 104 may use its mmWave radio to transmit discovery signal in the hop-0 discovery region; RN-1 112 and RN-2 116 may transmit discovery signals in hop-1 and hop-2 discovery regions, respectively; and RN-3 120 and RN-4 124 may transmit discovery signals in hop-3 discovery region.

In other embodiments, only two discovery regions may be used. The first discovery region may be used for relay nodes transmitting discovery signals at an even number hop location with respect to the anchor eNB, for example, eNB 104 and RN-2 116. The second discovery region may be used for relay nodes transmitting discovery signals at an oddnumbered hop location with respect to the anchor eNB, for example, RN-1 112, RN-3 120, and RN-4 124.

In some embodiments, the discovery signals of the relay nodes may be synchronous with PCell signals by ensuring a frame boundary and discovery period boundary of the SCells are aligned with corresponding boundaries in the PCell. This may allow the PCell to assist with relay node discovery. This may be done by the eNB 104 or the relay nodes performing a boundary alignment process periodically, or when it is determined that the boundaries have become misaligned.

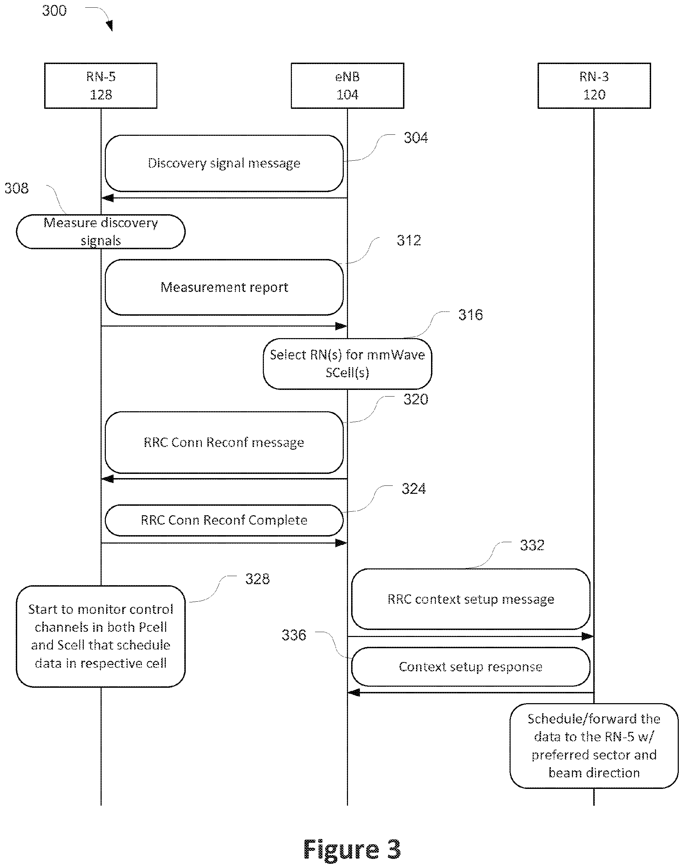

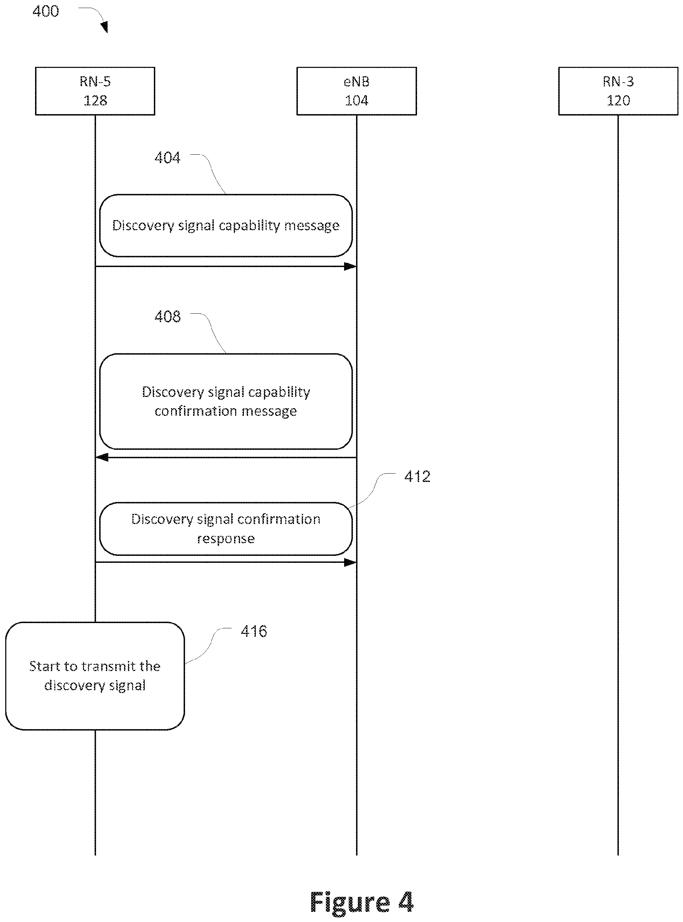

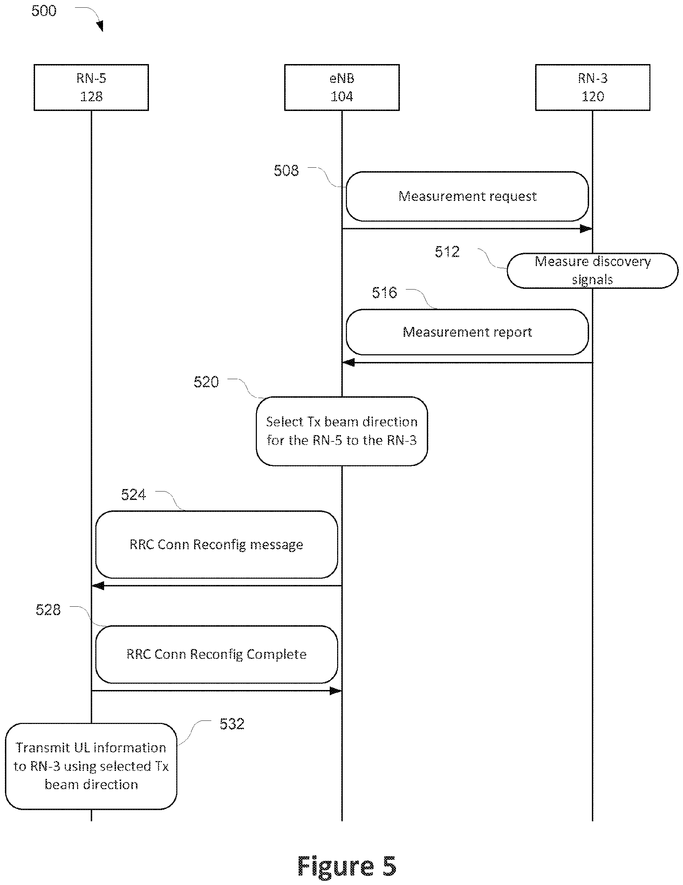

Figures 3-5 respectively illustrate phases 1-3 of an mmWave backhaul link establishment procedure in accordance with some embodiments. In particular, Figure 3 illustrates a downlink alignment (or "first") phase 300 of the mmWave backhaul link establishment procedure; Figure 4 illustrates a discovery signal configuration (or "second") phase 400 of the mmWave backhaul link establishment procedure; and Figure 5 illustrates an uplink beam alignment (or "third") phase 500 of the mmWave backhaul link establishment procedure in accordance with some embodiments. The phases of the mmWave backhaul link establishment procedure may be initiated after an anchor node, for example, the eNB 104, establishes an RRC connection with a target relay node, for example, the RN-5 128.

While phases 300, 400, and 500, are referred to as first, second, and third phases, this does not imply an ordered occurrence of these phases in all instances. For example, in some embodiments some of the phases may be done independent of the other phases, for example, the third phase may be performed more frequently than the first and second phases.

Referring first to the downlink alignment phase 300 illustrated in Figure 3, at 304, the eNB 104 transmits a discovery signal message to the RN-5 128. The discovery signal message includes configuration information of mmWave discovery signals that are to be transmitted by other relay nodes in the coverage area 108. The eNB 104 may have knowledge of the discovery signal configurations of the other relay nodes in coverage area 108 due to respective PCell connections with each of the other relay nodes. The configuration information may include, for example, the starting time position of each discovery cluster, a number of discovery occasions in each discovery cluster, and a periodicity of the discovery cluster for mmWave discovery signals transmitted by each of the other relay nodes in the coverage area 108. The discovery signal message also includes a request, which may be explicit or implicit, for measurement information corresponding to the mmWave discovery signals.

The RN-5 128 may, at 308, use the configuration information in the discovery signal message to measure metrics of mmWave discovery signals. The RN-5 128 may turn on its mmWave receiver during those time periods with a possible presence of mmWave discovery signals and, when detected, measure various metrics of the discovery signals. In some embodiments, the measured metrics may include, but are not limited to, reference signal received power (RSRP) and reference signal received quality (RSRQ). The detected mmWave discovery signal may be identified by a sequence identifier and a discovery occasion index within a discovery cluster. The sequence identifier identifies which of a number of parallel discovery signals transmitted by a relay node is being measured and the discovery occasion index may identify the particular beam used to transmit the detected discovery signal.

The RN-5 128, at 312, transmits a measurement report to the eNB 104. The measurement report 312 includes, for each detected discovery signal, indications of sequence and beam identifiers and the measured metrics. In some embodiments, the RN-5 128 may only report information for a discovery signal if its corresponding measured metrics are over a threshold. The threshold may be pre-configured by the eNB 104, determined by the RN-5 128, or otherwise predetermined.

At 316, the eNB 104 selects one or more relay nodes for one or more corresponding mmWave SCells to serve the RN-5 128. The relay nodes that are selected to provide mmWave SCell's for the RN-5 128 are selected based on the measured metrics of their discovery signals. In the described embodiments, the relay node selected to provide an mmWave SCell for the RN-5 128 may be RN-3 120. In some embodiments, such as the one presently described, only one mmWave SCell may be selected. In other embodiments, some of which are described in further detail below, more than one relay node/mmWave SCell may be selected.

At 320, the eNB 104 may transmit an RRC connection reconfiguration message. The RRC connection reconfiguration message may include information to configure the mmWave SCell provided by the RN-3 120. In some embodiments, the information may include defined transmit/receive TTI configurations of the mmWave SCell provided by the RN-3 120. The TTI configurations of the mmWave SCell provided by the RN-3 120 may indicate the TTIs the RN-3 120 transmits and/or receives information.

As described above, the RN-5 128 may use mmWave radio access technology (RAT) for both an access link and a backhaul link. Thus, in some embodiments time domain duplex for the mmWave relay nodes Tx/Rx may be adopted. As such, the Tx/Rx TTI configurations for adjacent relay nodes with established communication paths would complement each other. For example, a Tx TTI of RN-3 120 may correspond to an Rx TTI of RN-5 128 in Figure 1. Such complementary Tx/Rr TTI configurations may allow the same air interface to be used for both the backhaul link and the access link. For example, an mmWave-Uu interface may be used for both backhaul link and access link, in contrast to LTE in-band relay where Uu and Un interfaces may be used for access link and backhaul link, respectively.

At 324, the RN-5 128 may transmit an RRC connection reconfiguration complete message to the eNB 104 to indicate successful setup of the mmWave SCell.

Following 324, the RN-5 128 may, at 328, start to monitor control channels in both PCell and SCell that scheduled data in respective cells.

At 332, the eNB 104 transmits an RRC context setup message to the RN-3 120. The RRC context setup message includes an RRC context of the RN-5 128 including, for example, an identity of the RN-5 128 and its preferred beam directions. Preferred beam directions may be indicated by identifying a discovery occasion (using, for example, beam ID or discovery occasion index) and sector (using, for example, sequence ID).

At 336, the RN-3 120 may transmit a context setup response to the eNB 104. The context setup response may provide an indication that the context of the RN-5 128 is successfully received by the RN-3 120.

Following 336, the RN-3 120 may schedule and forward data to the RN-5 128 through the SCell using the preferred sector and beam direction.

While the first phase 300 is described as configuring one SCell for the RN-5 128, other embodiments may configure more than one SCell. For example, in some embodiments dynamic path switching may be enabled by the eNB 104 configuring both RN-3 120 and RN-4 124 to provide SCells for RN-5 128. Then, in a particular backhaul link TTI, the backhaul link packet to the RN-5 128 may be routed from either RN-3 120 or RN-4 124 depending on a routing decision made by the eNB 104 based on certain criteria. By doing so, dynamic path switching or routing may be implemented without backhaul link reconfiguration and may also be transparent to the target/destination relay node, for example, RN-5 128. Additionally, when both RN-3 120 and RN-4 124 are configured as upstream relay nodes for the RN-5 128, it may also enable cooperative transmission/reception operation for the backhaul link. Cooperative transmission may occur in the downlink when, for example, both RN-3 120 and RN-4 124 transmit the same information to the RN-5 128. Cooperative reception may occur in the uplink when, for example, the RN-5 128 transmits information to both RN-3 120 and RN-4 124.

In some embodiments, the discovery signal configuration phase 400 may follow the downlink alignment phase 300. The discovery signal configuration phase 400 may be used to configure discovery signals that are to be transmitted by the RN-5 128.

At 404, the RN-5 128 may transmit a discovery signal capability message to the eNB 104. The discovery signal capability message may include an indication of a number of parallel and sequential mmWave discovery signals that the RN-5 128 is capable of transmitting.

At 408, the eNB 104 may transmit a discovery signal capability confirmation message to the RN-5 128. In some embodiments, the discovery signal capability confirmation message may include an indication of the hop number associated with the RN-5 128. This hop number may be used by the RN-5 128 to determine in which discovery cluster of a discovery period the RN-5 128 is to transmit its discovery signals. For example, the discovery signal capability confirmation message may indicate that the RN-5 128 is associated with hop 3. Thus, the RN-5 128 may transmit its discovery signals in the discovery cluster that resides in the hop-3 discovery region.

At 412, the RN-5 128 may transmit a discovery signal confirmation response to the eNB 104. The discovery signal confirmation response may indicate that the RN-5 128 had successfully received the configuration information transmitted at 408.

At 416, the RN-5 128 may start to transmit the discovery signal. The discovery signal transmitted by the RN-5 128 may be used by other relay nodes for uplink beam alignment (as described in further detail with reference to Figure 5), identifying possible backhaul routes by newly camped relay nodes, or by UEs that are to use mmWave RAT as a user-access mechanism.

In some embodiments, the uplink beam alignment phase 500 may follow the discovery signal configuration phase 400. The uplink beam alignment phase 500 may be used to increase the efficiency of uplink communications transmitted from the RN-5 128 to the RN-3 120.

At 508, the eNB 104 may transmit a measurement request to the RN-3 120 to request measurement information corresponding to a discovery signal of the RN-5 128.

At 512, the RN-3 may measure the discovery signals transmitted by the RN-5 128 and record various metrics as discussed above. The measured metrics may include, but are not limited to, RSRP and RSRQ.

At 516, the RN-3 120 may transmit a measurement report to the eNB 104. The measurement report may include the measurement metrics and corresponding sequence and beam identifiers.

At 520, the eNB 104 may select an uplink transmit beam direction based on the measurement report. The uplink transmit beam direction may be the direction the eNB determines is the most efficient for transmitting uplink information through the multi-hop backhaul from the RN-5 128 to the RN-3 120.

At 524, the eNB 104 may transmit an RRC connection reconfiguration message to the RN-5 128. The RRC connection reconfiguration message may include an indication of the transmit beam direction that the RN-5 128 should use for transmitting information to RN-3 120.

At 528, the RN-5 128 may send an RRC connection reconfiguration complete message to the eNB 104. The RRC connection reconfiguration complete message may confirm that the RN-5 128 has received and successfully processed the information in the RRC connection reconfiguration message.

At 532, the RN-5 128 may transmit uplink information to the RN-3 120 using the selected transmit beam direction indicated in the RRC connection reconfiguration message.

Discovery signal measurements, such as those in 512, may be done periodically with the measurement results being regularly reported to the eNB 104. This may enable beam tracking to ensure that the uplink information is transmitted in an efficient manner. A similar process may also be enabled for downlink transmissions.

In some instances, the multi-hop backhaul link path may be changed. For example, for the sake of load balancing or improved power saving, the eNB 104 in Figure 1 may decide to switch the backhaul link of the RN-5 128 from Pl to P2. To do this, the eNB 104 may change the SCell configuration for the RN-5 128 from RN-3 120 to RN-4 124. In this case, the first phase 300 and the third phase 500 may be performed by substituting RN-4 124 for RN-3 120 to achieve downlink and uplink beam alignment for the new backhaul link L6.

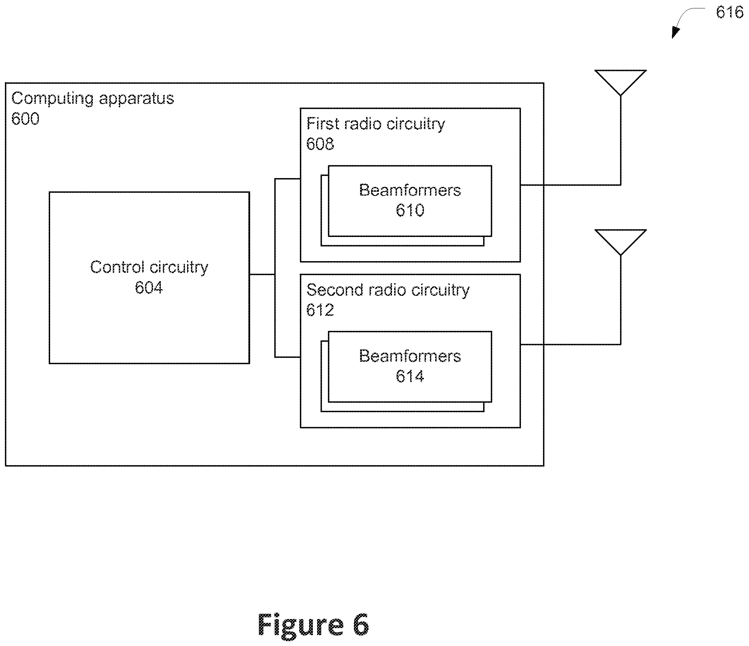

Figure 6 illustrates a computing apparatus 600 that represents a relay node or eNB in accordance with various embodiments. In embodiments, the computing apparatus 600 includes control circuitry 604 coupled with first radio circuitry 608 and second radio circuitry 612. The first radio circuitry 608 and the second radio circuitry 612 may be coupled with one or more antennas 616.

The first radio circuitry 608 may include a radio transceiver that is to operate in a mobile broadband spectrum. For example, the first radio circuitry 608 may include radio transmit/receive circuitry that is configured to transmit/receive RF signals having frequencies less than approximately 6 GHz. The first radio circuitry 608 may include one or more beamformers 610 that, in conjunction with the one or more antennas 616, may provide directed and, possibly, dynamically configurable, reception/transmission of the RF signals.

The second radio circuitry 612 may include a radio transceiver that is to operate in an mmWave spectrum. For example, the second radio circuitry 612 may include radio transmit/receive circuitry that is configured to transmit/receive RF signals having frequencies above 6 GHz and, in some embodiments, between approximately 30 and 300 GHz. The second radio circuitry 612 may include one or more beamformers 614 that, in conjunction with the one or more antennas 616, may provide directed and, possibly, dynamically configurable, reception/transmission of the RF signals.

Referring again to the example discussed above with respect to Figure 2, the second radio circuitry 612 may include three beamformers 614. Each of the beamformers 614 may serve a 120° sector. To transmit mmWave discovery signals in a corresponding sector, each beamformer 614 may be capable of operating with a beam direction spacing of 15°. Therefore, eight discovery signals may be transmitted in eight discovery occasions of a discovery cluster with each of the eight discovery signals being transmitted in a different beam direction. Other embodiments may include second radio circuitry 612 having other discovery signal capabilities. Indications of these discovery signal capabilities may be transmitted to the eNB in message 404 as described above with respect to Figure 4.

The control circuitry 604 may control operations of the first radio circuitry 608 and the second radio circuitry 612 to perform operations similar to those described elsewhere in this disclosure. For example, the control circuitry 604 may, in conjunction with the first radio circuitry 608 and the second radio circuitry 612, perform the operations of the eNB 104, RN-5 128, or RN-3 120 described above in phases 1-3 of the mmWave backhaul link establishment procedure. In general, the control circuitry 604 may control the first radio circuitry 608 and the second radio circuitry 612 to transmit/receive the messages described herein over the appropriate radio interfaces. The control circuitry 604 may perform higherlayer operations such as, for example, generating the messages that are to be transmitted, processing the messages that are received, selecting relay nodes to provide mmWave SCells, scheduling and transmitting data, etc.

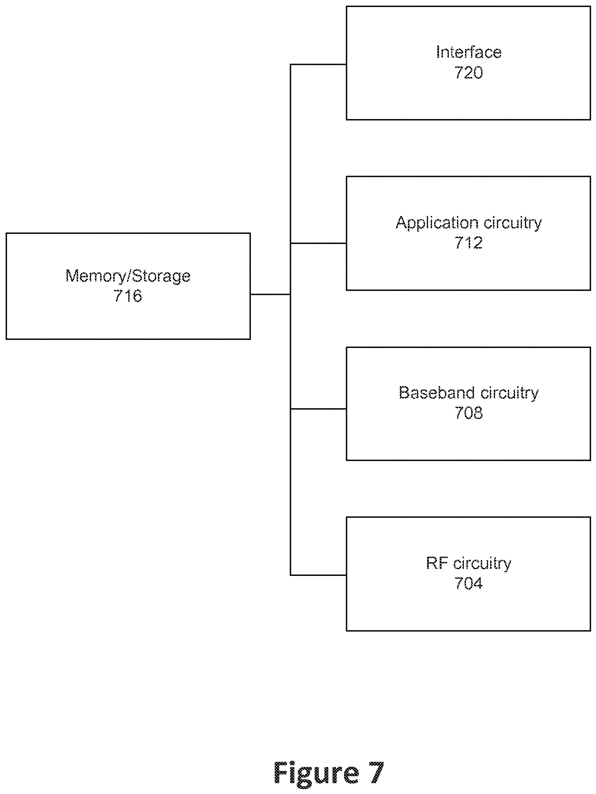

Embodiments described herein may be implemented into a system using any suitably configured hardware and/or software. Figure 7 illustrates, for one embodiment, an example system comprising radio frequency (RF) circuitry 704, baseband circuitry 708, application circuitry 712, memory/storage 716, and interface circuitry 720, coupled with each other at least as shown.

The application circuitry 712 may include circuitry such as, but not limited to, one or more single-core or multi-core processors. The processor(s) may include any combination of general-purpose processors and dedicated processors (e.g., graphics processors, application processors, etc.). The processors may be coupled with memory/storage 716 and configured to execute instructions stored in the memory/storage 716 to enable various applications and/or operating systems running on the system.

The baseband circuitry 708 may include circuitry such as, but not limited to, one or more single-core or multi-core processors. The processor(s) may include a baseband processor. The baseband circuitry 708 may handle various radio control functions that enable communication with one or more radio networks via the RF circuitry 704. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry 708 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 708 is configured to support radio communications of more than one wireless protocol may be referred to as multi-mode baseband circuitry.

In various embodiments, baseband circuitry 708 may include circuitry to operate with signals that are not strictly considered as being in a baseband frequency. For example, in some embodiments, baseband circuitry 708 may include circuitry to operate with signals having an intermediate frequency, which is between a baseband frequency and a radio frequency.

RF circuitry 704 may enable communication with wireless networks using modulated electromagnetic radiation through a non-solid medium. In various embodiments, the RF circuitry 704 may include switches, filters, amplifiers, etc. to facilitate the communication with the wireless network.

In various embodiments, RF circuitry 704 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the radio circuitry and control circuitry discussed herein with respect to the relay node or eNB may be embodied in whole or in part in one or more of the RF circuitry 704, the baseband circuitry 708, and/or the application circuitry 712.

In some embodiments, some or all of the constituent components of the baseband circuitry 708, the application circuitry 712, and/or the memory/storage 716 may be implemented together on a system on a chip (SOC).

Memory/storage 716 may be used to load and store data and/or instructions, for example, for the system. Memory/storage 716 for one embodiment may include any combination of suitable volatile memory (e.g., dynamic random access memory (DRAM)) and/or non-volatile memory (e.g., Flash memory).

In various embodiments, the interface circuitry 720 may include one or more user interfaces designed to enable user interaction with the system and/or peripheral component interfaces designed to enable peripheral component interaction with the system.

In various embodiments, the interface circuitry 720 may be a network interface that has circuitry to communicate with one or more other network technologies. For example, the interface circuitry 720 may be capable of communicating over Ethernet or other computer networking technologies using a variety of physical media interfaces such as, but not limited to, coaxial, twisted-pair, and fiber-optic media interfaces.

In various embodiments, the system may have more or fewer components, and/or different architectures.

The description herein of illustrated implementations, including what is described in the Abstract, is not intended to be exhaustive or to limit the present disclosure to the precise forms disclosed. While specific implementations and examples are described herein for illustrative purposes, the scope of the invention is defined by the appended claims.

## Claims

1. One or more computer-readable media having instructions that, when executed, cause an eNB (600) to:
establish a primary cell, PCell, in a mobile broadband spectrum to communicate with a first relay node;
transmit, via the PCell, a discovery signal message that includes configuration information of millimeter wave, mmWave, discovery signals that are to be transmitted by one or more additional relay nodes and a request for measurement information corresponding to the mmWave discovery signals; wherein the configuration information includes discovery occasions and sequence identifiers, wherein:
- each of the first and the one or more additional relay nodes is configured to transmit a number of parallel mmWave discovery signals, with each mmWave discovery signal using a respective signal sequence,
- the signal sequence used by each of the first and one or more additional relay nodes identifies the respective each of the first and the one or more additional relay nodes,
- a discovery cluster is transmitted periodically with a discovery period and includes a number of discovery occasions,
- in each discovery occasion of the discovery cluster the mmWave discovery signal is transmitted with a different beam direction,
receive, via the PCell, a measurement report from the first relay node that includes measurement information that corresponds to the mmWave discovery signals, the measurement report includes; a sequence identifier that identifies which of the number of parallel mmWave discovery signals transmitted by a relay node of the one or more additional relay nodes is measured by the first relay node and a discovery occasion index that identifies the particular beam used to transmit the detected mmWave discovery signal,
select a second relay node, based on the measurement report, to provide a mmWave secondary cell, SCell, for the first relay node; and
transmit, to the second relay node, a radio resource control, RRC, context of the first relay node that includes the sequence identifier and the discovery occasion index.

2. The one or more computer-readable media of claim 1, wherein the instructions, when executed, further cause the eNB to:
receive, discovery signal capability message from the first relay node that includes an indication of the number of parallel mmWave discovery signals the first relay node is capable of transmitting; and
transmit discovery signal capability confirmation to the first relay node, the discovery signal capability confirmation to include an indication of a hop number to determine in which discovery region of a discovery period the first relay node is to transmit mmWave discovery signals wherein:
discovery regions are defined at the beginning of each discovery period,
each discovery region includes a number of discovery occasions, and
relay nodes at different hops transmit mmWave discovery signals at the discovery occasions of different regions.

3. The one or more computer-readable media of any one of claims 1-2, wherein the instructions, when executed, further cause the eNB to:
transmit, to the second relay node, a request for measurement information corresponding to a discovery signal of the first relay node;
receive, a measurement report from the second relay node, that includes a sequence identifier and a beam identifier;
select a transmit beam direction for transmissions from the first relay node to the second relay node; and
transmit an indication of the transmit beam direction to the first relay node.

4. The one or more computer-readable media of claim 1, wherein the mmWave SCell is a first mmWave SCell and the instructions, when executed, further cause the eNB to:
select a third relay node, based on the measurement report, to provide a second mmWave SCell for the first relay node.

5. A first relay node configured to provide a user access cell, the first relay node comprising:
first radio circuitry (608) configured to communicate in a mobile broadband spectrum;
second radio circuitry (612) configured to communicate in a millimeter wave, mmWave, spectrum; and
control circuitry (604) coupled with the first radio circuitry (608) and the second radio circuitry (612), the control circuitry (604) configured to:
receive, via the first radio circuitry (608) from an enhanced node B, eNB, through a primary cell, PCell, provided by the eNB, a discovery signal message that includes configuration information of mmWave discovery signals which configuration information includes discovery occasions and sequence identifiers and are to be transmitted by the first and one or more additional relay nodes within a coverage area of the eNB and a request for measurement information corresponding to the mmWave discovery signals;
- wherein the signal sequence used by each of the first and one or more additional relay' nodes identifies the respective each of the first and the one or more additional relay nodes, and
- wherein the mmWave discovery signals comprise discovery clusters transmitted periodically with a discovery period and includes a number of discovery occasions, and in each discovery occasion of the discovery cluster the mmWave discovery signal is transmitted with a different beam direction, control the second radio circuitry (612) to measure mmWave discovery signals based on the configuration information;
transmit, via the first radio circuitry (608), a measurement report that includes measurement information corresponding to the mmWave discovery signals to the eNB, the measurement report includes a sequence identifier that identifies which of a number of parallel mmWave discovery signals transmitted by one of the one or more additional relay nodes is measured by the first relay node and a discovery occasion index that identifies a particular beam used to transmit the mmWave discovery signal
wherein the second radio circuitry comprises one or more radio frequency , RF, beam formers and the second radio circuitry is configured to transmit mmWave discovery signals in one or more discovery clusters that respectively correspond to the one or more radio frequency beam formers.

6. The first relay node of claim 5, wherein the control circuitry (604) is further configured to receive, via the first radio circuitry (60S), a radio resource control message that includes configuration information of a mmWave secondary cell, SCell, to be provided to the first relay node by a relay node of the one or more additional relay nodes.

7. The first relay node of claim 6, wherein the control circuitry (604) is configured to control the first radio circuitry (60S) to monitor a control channel of the PCell and to control the second radio circuitry (612) to monitor control channel of the SCell.

8. The first relay node of claim 6, wherein the control circuitry (604) is configured to:
transmit, via the first radio circuitry (60S), discovery signal capability information that includes the number of parallel mmWave discovery signals that the second radio circuitry (612) is capable of transmitting; and
receive, via the first radio circuitry (60S) from the eNB, discovery signal capability confirmation that includes an indication of a hop number to determine in which discovery region of a discovery period the first relay node is to transmit mmWave discovery signals, wherein:
- discovery regions are defined at the beginning of each discovery period,
- each discovery region includes a number of discovery occasions, and
- relay nodes at different hops transmit mmWave discovery signals at the discovery occasions of different regions.

9. The first relay node of any one of claims 5-8, wherein the one or more discovery clusters overlap in time.

10. The first relay node of claim 9, wherein a first RF beam former is configured to transmit a plurality of mmWave discovery signals in a corresponding plurality of discovery occasions in a discovery cluster with each of the plurality of mmWave discovery signals transmitted in a different beam direction

## Patentansprüche

1. Ein oder mehrere computerlesbare Medien mit Anweisungen, die, wenn sie ausgeführt werden, einen eNB (600) veranlassen zum:
Einrichten einer primären Zelle, PCell, in einem mobilen Breitbandspektrum, um mit einem ersten Relaisknoten zu kommunizieren;
Senden, über die PCell, einer Entdeckungssignalnachricht, die Konfigurationsinformation von Millimeterwellen-, mmWave, Entdeckungssignalen, die durch einen oder mehrere zusätzliche Relaisknoten zu senden sind, und eine Anfrage nach Messinformation, die den mmWave-Entdeckungssignalen entspricht, beinhaltet; wobei die Konfigurationsinformation Entdeckungsgelegenheiten und Sequenzidentifikatoren beinhaltet, wobei:
- jeder des ersten und des einen oder der mehreren zusätzlichen Relaisknoten konfiguriert ist zum Übertragen einer Anzahl von parallelen mmWave-Entdeckungssignalen, wobei jedes mmWave-Entdeckungssignal eine jeweilige Signalsequenz verwendet,
- die Signalsequenz, die durch jeden des ersten und eines oder mehrerer zusätzlicher Relaisknoten verwendet wird, den jeweiligen jeden des ersten und des einen oder der mehreren zusätzlichen Relaisknoten identifiziert,
- ein Entdeckungscluster periodisch mit einer Entdeckungsperiode übertragen wird und eine Anzahl von Entdeckungsgelegenheiten beinhaltet,
- in jeder Entdeckungsgelegenheit des Entdeckungsclusters das mmWave-Entdeckungssignal mit einer unterschiedlichen Strahlrichtung übertragen wird,
Empfangen, über die PCell, eines Messberichts vom ersten Relaisknoten, der Messinformation beinhaltet, die den mmWave-Entdeckungssignalen entspricht, wobei der Messbericht einen Sequenzidentifikator beinhaltet, der identifiziert, welches der Anzahl von parallelen mmWave-Entdeckungssignalen, die durch einen Relaisknoten des einen oder der mehreren zusätzlichen Relaisknoten übertragen werden, durch den ersten Relaisknoten gemessen wird, und einen Entdeckungsgelegenheitsindex, der den bestimmten Strahl identifiziert, der zum Übertragen des detektierten mmWave-Entdeckungssignals verwendet wird,
Auswählen eines zweiten Relaisknotens, basierend auf dem Messbericht, um eine mmWave sekundäre Zelle, SCell, für den ersten Relaisknoten bereitzustellen; und
Übertragen, an den zweiten Relaisknoten, eines Funkressourcensteuerungs-, RRC, Kontexts des ersten Relaisknotens, der den Sequenzidentifikator und den Entdeckungsgelegenheitsindex beinhaltet.

2. Das eine oder die mehreren computerlesbaren Medien nach Anspruch 1, wobei die Anweisungen, wenn sie ausgeführt werden, den eNB ferner veranlassen zum:
Empfangen von Entdeckungssignalfähigkeitsnachricht vom ersten Relaisknoten, die eine Anzeige der Anzahl von parallelen mmWave-Entdeckungssignalen beinhaltet, die der erste Relaisknoten zum Übertragen fähig ist; und
Übertragen von Entdeckungssignalfähigkeitsbestätigung an den ersten Relaisknoten, wobei die Entdeckungssignalfähigkeitsbestätigung eine Anzeige einer Hop-Anzahl beinhalten soll, um zu bestimmen, in welcher Entdeckungsregion einer Entdeckungsperiode der erste Relaisknoten mmWave-Entdeckungssignale übertragen soll, wobei:
Entdeckungsregionen am Beginn jeder Entdeckungsperiode definiert sind, jede Entdeckungsregion eine Anzahl von Entdeckungsgelegenheiten beinhaltet, und
Relaisknoten an unterschiedlichen Hops mmWave-Entdeckungssignale an den Entdeckungsgelegenheiten unterschiedlicher Regionen übertragen.

3. Das eine oder die mehreren computerlesbaren Medien nach einem der Ansprüche 1 bis 2, wobei die Anweisungen, wenn sie ausgeführt werden, den eNB ferner veranlassen zum:
Übertragen, an den zweiten Relaisknoten, einer Anfrage nach Messinformation, die einem Entdeckungssignal des ersten Relaisknotens entspricht;
Empfangen, eines Messberichts vom zweiten Relaisknoten, der einen Sequenzidentifikator und einen Strahlidentifikator beinhaltet;
Auswählen einer Übertragungsstrahlrichtung für Übertragungen vom ersten Relaisknoten zum zweiten Relaisknoten; und
Übertragen einer Anzeige der Übertragungsstrahlrichtung an den ersten Relaisknoten.

4. Das eine oder die mehreren computerlesbaren Medien nach Anspruch 1, wobei die mmWave SCell eine erste mmWave SCell ist und die Anweisungen, wenn sie ausgeführt werden, den eNB ferner veranlassen zum: Auswählen eines dritten Relaisknotens, basierend auf dem Messbericht, um eine zweite mmWave SCell für den ersten Relaisknoten bereitzustellen.

5. Ein erster Relaisknoten, der konfiguriert ist, um eine Benutzerzugriffszelle bereitzustellen, wobei der erste Relaisknoten umfasst:
erste Funkschaltung (608), die konfiguriert ist, um in einem mobilen Breitbandspektrum zu kommunizieren;
zweite Funkschaltung (612), die konfiguriert ist, um in einem Millimeterwellen-, mmWave, Spektrum zu kommunizieren; und
Steuerschaltung (604), die mit der ersten Funkschaltung (608) und der zweiten Funkschaltung (612) gekoppelt ist, wobei die Steuerschaltung (604) konfiguriert ist zum:
Empfangen, über die erste Funkschaltung (608) von einem erweiterten Knoten B, eNB, durch eine primäre Zelle, PCell, die durch den eNB bereitgestellt wird, einer Entdeckungssignalnachricht, die Konfigurationsinformation von mmWave-Entdeckungssignalen beinhaltet, welche Konfigurationsinformation Entdeckungsgelegenheiten und Sequenzidentifikatoren beinhaltet und durch den ersten und einen oder mehrere zusätzliche Relaisknoten innerhalb eines Abdeckungsbereichs des eNB zu übertragen sind, und einer Anfrage nach Messinformation, die den mmWave-Entdeckungssignalen entspricht;
- wobei die Signalsequenz, die durch jeden des ersten und eines oder mehrerer zusätzlicher Relaisknoten verwendet wird, den jeweiligen jeden des ersten und des einen oder der mehreren zusätzlichen Relaisknoten identifiziert, und
- wobei die mmWave-Entdeckungssignale Entdeckungscluster umfassen, die periodisch mit einer Entdeckungsperiode übertragen werden, und eine Anzahl von Entdeckungsgelegenheiten beinhaltet, und in jeder Entdeckungsgelegenheit des Entdeckungsclusters das mmWave-Entdeckungssignal mit einer unterschiedlichen Strahlrichtung übertragen wird;
Steuern der zweiten Funkschaltung (612), um mmWave-Entdeckungssignale basierend auf der Konfigurationsinformation zu messen;
Übertragen, über die erste Funkschaltung (608), eines Messberichts, der Messinformation beinhaltet, die den mmWave-Entdeckungssignalen entspricht, an den eNB, wobei der Messbericht einen Sequenzidentifikator beinhaltet, der identifiziert, welches einer Anzahl von parallelen mmWave-Entdeckungssignalen, die durch einen des einen oder der mehreren zusätzlichen Relaisknoten übertragen werden, die durch den ersten Relaisknoten gemessen werden, identifiziert, und eines Entdeckungsgelegenheitsindex, der einen bestimmten Strahl identifiziert, der verwendet wird, um das mmWave-Entdeckungssignal zu übertragen, wobei die zweite Funkschaltung einen oder mehrere Funkfrequenz-, RF, Strahlformer umfasst und die zweite Funkschaltung konfiguriert ist, um mmWave-Entdeckungssignale in einem oder mehreren Entdeckungsclustern zu übertragen, die jeweils dem einen oder den mehreren Funkfrequenzstrahlformern entsprechen.

6. Der erste Relaisknoten nach Anspruch 5, wobei die Steuerschaltung (604) ferner konfiguriert ist, um über die erste Funkschaltung (608) eine Funkressourcensteuerungsnachricht zu empfangen, die Konfigurationsinformation einer mmWave sekundären Zelle, SCell, beinhaltet, die dem ersten Relaisknoten durch einen Relaisknoten des einen oder der mehreren zusätzlichen Relaisknoten bereitzustellen ist.

7. Der erste Relaisknoten nach Anspruch 6, wobei die Steuerschaltung (604) konfiguriert ist, um die erste Funkschaltung (608) zu steuern, um einen Steuerkanal der PCell zu überwachen und um die zweite Funkschaltung (612) zu steuern, um den Steuerkanal der SCell zu überwachen.

8. Der erste Relaisknoten nach Anspruch 6, wobei die Steuerschaltung (604) konfiguriert ist zum:
Übertragen, über die erste Funkschaltung (608), von Entdeckungssignalfähigkeitsinformation, die die Anzahl von parallelen mmWave-Entdeckungssignalen beinhaltet, die die zweite Funkschaltung (612) zum Übertragen fähig ist; und
Empfangen, über die erste Funkschaltung (608) vom eNB, von Entdeckungssignalfähigkeitsbestätigung, die eine Anzeige einer Hop-Anzahl beinhaltet, um zu bestimmen, in welcher Entdeckungsregion einer Entdeckungsperiode der erste Relaisknoten mmWave-Entdeckungssignale übertragen soll, wobei:
- Entdeckungsregionen am Beginn jeder Entdeckungsperiode definiert sind, jede Entdeckungsregion eine Anzahl von Entdeckungsgelegenheiten beinhaltet, und
- Relaisknoten an unterschiedlichen Hops mmWave-Entdeckungssignale an den Entdeckungsgelegenheiten unterschiedlicher Regionen übertragen.

9. Der erste Relaisknoten nach einem der Ansprüche 5 bis 8, wobei sich der eine oder die mehreren Entdeckungscluster zeitlich überlappen.

10. Der erste Relaisknoten nach Anspruch 9, wobei ein erster RF-Strahlformer konfiguriert ist, um eine Vielzahl von mmWave-Entdeckungssignalen in einer entsprechenden Vielzahl von Entdeckungsgelegenheiten in einem Entdeckungscluster mit jedem der Vielzahl von mmWave-Entdeckungssignalen zu übertragen, die in einer unterschiedlichen Strahlrichtung übertragen werden.

## Revendications

1. Un ou plusieurs supports lisibles par calculateur comportant des instructions qui, quand elles sont exécutées, amènent un eNB (600) à :
établir une cellule primaire, PCell, dans un spectre à large bande pour mobile afin de communiquer avec un premier nœud relais ;
transmettre, via la PCell, un message de signal de découverte qui contient une information de configuration de signaux de découverte en ondes millimétriques, mmWave, qui doivent être transmis par un ou plusieurs nœuds relais additionnels et une requête pour une information de mesure correspondant aux signaux de découverte mmWave ; où l'information de configuration inclut des occasions de découverte et des identificateurs de séquence, où :
- chacun du premier et des un ou plusieurs nœuds relais additionnels est configuré pour transmettre un nombre de signaux de découverte mmWave parallèles, avec chaque signal de découverte mmWave utilisant une séquence de signal respective,
- la séquence de signal utilisée par chacun du premier et des un ou plusieurs nœuds relais additionnels identifie chaque nœud respectif parmi le premier et les un ou plusieurs nœuds relais additionnels,
- un groupement de découverte est transmis périodiquement avec une période de découverte et inclut un nombre d'occasions de découverte,
- dans chaque occasion de découverte du groupement de découverte, le signal de découverte mmWave est transmis avec une direction de faisceau différente,
recevoir en provenance du premier nœud relais, via la PCell, un rapport de mesure qui inclut une information de mesure qui correspond aux signaux de découverte mmWave, le rapport de mesure incluant : un identificateur de séquence qui identifie lequel du nombre de signaux de découverte mmWave parallèles transmis par un nœud relais des un ou plusieurs nœuds relais additionnels est mesuré par le premier nœud relais, et un indice d'occasion de découverte qui identifie le faisceau particulier utilisé pour transmettre le signal de découverte mmWave détecté,
sélectionner, sur la base du rapport de mesure, un deuxième nœud relais pour produire une cellule secondaire, SCell, mmWave pour le premier nœud relais ; et
transmettre au deuxième nœud relais un contexte de contrôle de ressource radio, RRC, du premier nœud relais qui inclut l'identificateur de séquence et l'indice d'occasion de découverte.

2. Les un ou plusieurs supports lisibles par calculateur selon la revendication 1, dans lesquels les instructions, quand elles sont exécutées, amènent en outre l'eNB à :
recevoir un message de capacité de signal de découverte en provenance du premier nœud relais, qui inclut une indication du nombre de signaux de découverte mmWave parallèles que le premier nœud relais est apte à transmettre ; et
transmettre une confirmation de capacité de signal de découverte au premier nœud relais, la confirmation de capacité de signal de découverte devant inclure une indication d'un nombre de bonds pour déterminer dans quelle région de découverte d'une période de découverte le premier nœud relais doit transmettre des signaux de découverte mmWave, où :
des régions de découverte sont définies au début de chaque période de découverte,
chaque région de découverte inclut un nombre d'occasions de découverte, et
des nœuds relais au niveau de différents bonds transmettent des signaux de découverte mmWave au niveau des occasions de découverte de régions différentes.

3. Les un ou plusieurs supports lisibles par calculateur selon une des revendications 1 à 2, dans lesquels les instructions, quand elles sont exécutées, amènent en outre l'eNB à :
transmettre, au deuxième nœud relais, une requête pour une information de mesure correspondant à un signal de découverte du premier nœud relais ;
recevoir un rapport de mesure en provenance du deuxième nœud relais, qui inclut un identificateur de séquence et un identificateur de faisceau ;
sélectionner une direction de faisceau de transmission pour des transmissions du premier nœud relais au deuxième nœud relais ; et
transmettre une indication de la direction de faisceau de transmission au premier nœud relais.

4. Les un ou plusieurs supports lisibles par calculateur selon la revendication 1, dans lesquels la SCell mmWave est une première SCell mmWave, et les instructions, quand elles sont exécutées, amènent en outre l'eNB à :
sélectionner, sur la base du rapport de mesure, un troisième nœud relais pour produire une seconde SCell mmWave pour le premier nœud relais.

5. Un premier nœud relais configuré pour fournir une cellule d'accès d'utilisateur, le premier nœud relais comprenant :
une première circuiterie radio (608) configurée pour communiquer dans un spectre à large bande pour mobile ;
une seconde circuiterie radio (612) configurée pour communiquer dans un spectre en ondes millimétriques, mmWave ; et
une circuiterie de contrôle (604) couplée à la première circuiterie radio (608) et à la seconde circuiterie radio (612), la circuiterie de contrôle (604) étant configurée pour :
recevoir, via la première circuiterie radio (608) en provenance d'un nœud B amélioré, eNB, par l'intermédiaire d'une cellule primaire, PCell, produite par l'eNB, un message de signal de découverte qui contient une information de configuration de signaux de découverte mmWave, dont l'information de configuration inclut des occasions de découverte et des identificateurs de séquence et qui doivent être transmis par le premier et un ou plusieurs nœuds relais additionnels dans une zone de couverture de l'eNB et une requête pour une information de mesure correspondant aux signaux de découverte mmWave ;
- où la séquence de signal utilisée par chacun du premier et des un ou plusieurs nœuds relais additionnels identifie chaque nœud respectif parmi le premier et les un ou plusieurs nœuds relais additionnels, et
- où les signaux de découverte mmWave comprennent des groupements de découverte transmis périodiquement avec une période de découverte et incluent un nombre d'occasions de découverte, et dans chaque occasion de découverte du groupement de découverte, le signal de découverte mmWave est transmis avec une direction de faisceau différente,
contrôler la seconde circuiterie radio (612) pour mesurer des signaux de découverte mmWave sur la base de l'information de configuration ;
transmettre, via la première circuiterie radio (608), un rapport de mesure qui inclut une information de mesure qui correspond aux signaux de découverte mmWave à l'eNB, le rapport de mesure inclut un identificateur de séquence qui identifie lequel d'un nombre de signaux de découverte mmWave parallèles transmis par un nœud relais des un ou plusieurs nœuds relais additionnels est mesuré par le premier nœud relais et un indice d'occasion de découverte qui identifie un faisceau particulier utilisé pour transmettre le signal de découverte mmWave,
où la seconde circuiterie radio comprend un ou plusieurs dispositifs de formation de faisceau radiofréquence, RF, et la seconde circuiterie radio est configurée pour transmettre des signaux de découverte mmWave dans un ou plusieurs groupements de découverte qui correspondent respectivement aux un ou plusieurs dispositifs de formation de faisceau radiofréquence.

6. Le premier nœud relais selon la revendication 5, dans lequel la circuiterie de contrôle (604) est configurée en outre pour recevoir, via la première circuiterie radio (60S), un message de contrôle de ressource radio qui inclut une information de configuration d'une cellule secondaire, SCell, mmWave à produire pour le premier nœud relais par un nœud relais des un ou plusieurs nœuds relais additionnels.

7. Le premier nœud relais selon la revendication 6, dans lequel la circuiterie de contrôle (604) est configurée pour contrôler la première circuiterie radio (60S) pour surveiller un canal de contrôle de la PCell et pour contrôler la seconde circuiterie radio (612) pour surveiller un canal de contrôle de la SCell.

8. Le premier nœud relais selon la revendication 6, dans lequel la circuiterie de contrôle (604) est configurée pour :
transmettre, via la première circuiterie radio (60S), une information de capacité de signal de découverte qui inclut le nombre de signaux de découverte mmWave parallèles que la seconde circuiterie radio (612) est apte à transmettre ; et
recevoir, via la première circuiterie radio (60S) en provenance de l'eNB, une confirmation de capacité de signal de découverte qui inclut une indication d'un nombre de bonds pour déterminer dans quelle région de découverte d'une période de découverte le premier nœud relais doit transmettre des signaux de découverte mmWave, où :
- des régions de découverte sont définies au début de chaque période de découverte,
- chaque région de découverte inclut un nombre d'occasions de découverte, et
- des nœuds relais au niveau de différents bonds transmettent des signaux de découverte mmWave au niveau des occasions de découverte de régions différentes.

9. Le premier nœud relais selon une des revendications 5 à 8, dans lequel les un ou plusieurs groupements de découverte se chevauchent dans le temps.

10. Le premier nœud relais selon la revendication 9, dans lequel un premier dispositif de formation de faisceau RF est configuré pour transmettre une pluralité de signaux de découverte mmWave dans une pluralité correspondante d'occasions de découverte dans un groupement de découverte avec chacun de la pluralité de signaux de découverte mmWave transmis dans une direction de faisceau différente.
